# EUROPÄISCHE PATENTSCHRIFT

(11) **EP 1 837 268 B1**
(45) Veröffentlichungstag und Bekanntmachung des Hinweises auf die Patenterteilung: **23.11.2011**
(21) Anmeldenummer: 06026013.0
(22) Anmeldetag: 15.12.2006
(51) Int. Cl.: B62D 21/11, B60K 5/12

(54) **Hilfsrahmen für Kraftfahrzeuge sowie Verfahren zur Montage eines Antriebsaggregats auf einem solchen Hilfsrahmen**
Subframe for motor vehicles and method of mounting a drive train on such a subframe
Châssis auxiliaire pour véhicules automobiles et procédé de montage d'un groupe motopropulseur sur un tel châssis auxiliaire

(30) Priorität: 24.03.2006 DE 102006013550
(43) Veröffentlichungstag der Anmeldung: 26.09.2007
(73) Patentinhaber: AUDI AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 1 690 779
- EP-A- 1 787 894
- EP-A- 1 829 767
- DE-A1- 3 942 794
- DE-A1- 19 923 693
- US-A- 4 392 545
- US-A1- 2005 248 113

## Beschreibung

Die Erfindung betrifft einen Hilfsrahmen gemäß dem Oberbegriff des Patentanspruches 1 oder des Patentanspruches 20, eine Fahrzeugkarosserie mit einem daran montierten Hilfsrahmen gemäß dem Patentanspruch 21, ein Adapterteil für einen Hilfsrahmen gemäß dem Patentanspruch 22, sowie ein Verfahren zur Montage eines Antriebsaggregats auf einem Hilfsrahmen gemäß dem Oberbegriff des Patentanspruches 23.

Hilfsrahmen für Kraftfahrzeuge, die auch als Achsträger bezeichnet werden, sind allgemein bekannt und werden regelmäßig über entsprechende Anbindungsstellen mit der Karosserie verschraubt. Derartige Hilfsrahmen können sowohl im Bereich der Vorderachsen als Vorderachshilfsrahmen als auch im Bereich der Hinterachsen Verwendung finden.

Aus der EP 0 941 912 B1 ist ein als Achsträger ausgebildeter Hilfsrahmen für Kraftfahrzeuge mit zwei einander seitlich gegenüberliegenden Hilfsrahmen-Längsträgern bekannt. Die Hilfsrahmen-Längsträger sind an ihrer in Fahrtrichtung vorderen Stirnseite mit einem Querträger verbunden. Der Hilfsrahmen ist hier einen Vorderachshilfsrahmen und weist an seinen Hilfsrahmen-Längsträgern Lagerstellen für ein Antriebsaggregat des Kraftfahrzeugs auf.

Ein weiterer Hilfsrahmen für Kraftfahrzeuge ist aus der EP 1 386 827 A2 bekannt. Demgemäß ist der Hilfsrahmen ein geschlossener Rahmen mit zwei Längsträgern und zwei Querträgern und über dämpfende Lager mit dem Aufbau des Kraftfahrzeugs verbunden. Ein Antriebsaggregat des Kraftfahrzeugs ist in einer Dreipunktlagerung über entsprechende Gummilager auf den beiden Querträgern abgestützt.

Generell ist die Abstützbasis für das Antriebsaggregat mit einer Dreipunktlagerung hinreichend bestimmt ausgelegt. Insbesondere bei Premiumfahrzeugen ist jedoch aus Komfortgründen eine Überbestimmung der Abstützbasis des Antriebsaggregats üblich. In diesem Fall kann die Dreipunktlagerung etwa mit zwei weiteren Lagerstellen am Hilfsrahmen ergänzt sein. Bei einer solchen Fünfpunktlagerung können die zusätzlichen Lagerstellen den vorderen Bereich des Getriebes des Antriebsaggregats abstützen. Dadurch werden Biegeschwingungen des Antriebsaggregats verhindert, die sich im Falle einer Dreipunktlagerung zwischen den in Fahrtrichtung beabstandeten Lagern im Antriebsaggregat ergeben. Neben einer Verbesserung der akustischen Eigenschaften ermöglicht eine solche Fünfpunktlagerung des Antriebsaggregats eine gleichmäßigere Verteilung der Lagerkräfte bei gleichzeitiger Reduzierung der Einzellagerkräfte.

Für Fahrzeuge niedriger Komfortklasse sind daher einerseits Hilfsrahmen vorzuhalten, die eine Dreipunktlagerung des Antriebsaggregats ermöglichen. Andererseits sind speziell ausgelegte Hilfsrahmen für Premiumfahrzeuge bereitzustellen, die neben der Dreipunktlagerung weitere Lagerstellen aufweisen. Demzufolge müssen in logistisch aufwendiger Weise unterschiedliche Hilfsrahmen vorgehalten werden.

Aus der US-A-4 392 545 ist ein gattungsgemäßer Hilfsrahmen für ein Kraftfahrzeug bekannt, der eine Vier-Punkt-Lagerung für das Antriebsaggregat bereitstellt. Aus der DE 199 23 693 A1 ist ein weiterer Hilfsrahmen bekannt, der nur ein Lager für da Antriebsaggregat vor sieht. Die aus diesen Druckschriften bekannten Hilfsrahmen können nicht ohne erheblichen Aufwand an verschiedene Komfortklassen des Fahrzeugs angepasst werden. Aus der DE 39 42 794 A1 ist ein weiterer Hilfsrahmen für ein Kraftfahrzeug bekannt, bei dem zwischen den Hilfsrahmen-Längsträgern kreuzförmig angeordnete Verstrebungen vorgesehen sind.

Die Aufgabe der Erfindung besteht darin, einen Hilfsrahmen für Kraftfahrzeuge, eine Fahrzeugkarosserie mit montiertem Hilfsrahmen, ein Adapterteil für einen solchen Hilfsrahmen, oder ein Verfahren zur Montage eines Antriebsaggregats aufeinen solchen Hilfsrahmen zu schaffen, bei dem eine Fahrzeugmontage vereinfacht ist.

Diese Aufgabe wird durch die Merkmale des Patentanspruchs 1, des Patentanspruches 20, 21, 22 oder des Patentanspruches 23 gelöst. Vorteilhafte Weiterbildungen der Erfindung sind in den jeweiligen Unteransprüchen offenbart.

Der erfindungsgemäße Hilfsrahmen weist einen Grundhilfsrahmen auf, der zumindest eine hilfsrahmenseitige Lagerstelle vorsieht, die zusammen mit zumindest einer weiteren hilfsrahmenseitigen und/oder karosserieseitigen Lagerstelle ein Antriebsaggregat abstützt. Der Grundhilfsrahmen ist mittels eines Adapterteils erweiterbar, das zumindest eine Zusatzlagerstelle bereitstellt. Der Hilfsrahmen ist daher in seiner Grundausführung für Kraftfahrzeuge niedriger Komfortklasse einsetzbar. Bei einer Verwendung des Grundhilfsrahmens für ein Fahrzeug hoher Komfortklasse kann der Grundhilfsrahmen mit dem Adapterteil erweitert werden und so zumindest eine Zusatzlagerstelle bereitstellen, die das Antriebsaggregat noch zusätzlich abstützt.

So kann in einer Ausführungsform der Grundhilfsrahmen zwei Lagerstellen aufweisen, die zusammen mit einer dritten, karosserieseitigen Lagerstelle eine Dreipunktlagerung bilden. Die dritte karosserieseitige Lagerstelle kann auf einer Traverse im Bereich des Mittentunnels der Fahrzeugkarosserie vorgesehen sein. Bei der Dreipunktlagerung ist die Brennkraftmaschine des Antriebsaggregats vor allem durch die beiden hilfsrahmenseitigen vorderen Lagerstellen abgestützt, während das hinter der Brennkraftmaschine angeflanschte Getriebe durch den karosserieseitigen Lagerpunkt abgestützt ist. Diese, vom Grundhilfsrahmen bereitgestellte Dreipunktlagerung ist für Fahrzeuge niedriger Komfortklasse ausgelegt.

Bei einer Verwendung in einem Fahrzeug hoher Komfortklasse ist der Grundhilfsrahmen durch das erfindungsgemäße Adapterteil erweiterbar, das zumindest eine Zusatzlagerstelle bereitstellt. Die Zusatzlagerstelle kann dabei vorzugsweise zwischen den bereits vorhandenen Lagerstellen der Dreipunktlagerung angeordnet sein und etwa den vorderen Bereich des Getriebes zusätzlich abstützen.

Durch die zumindest eine Zusatzlagerstelle können die zwischen den bereits vorhandenen Lagerstellen der Dreipunktlagerung entstehenden Biegeschwingungen aufgrund einer Längenausdehnung des Antriebsaggregats aufgenommen werden. Aus solchen Biegeschwingungen resultierende Akustikprobleme können daher vermieden werden. Im übrigen ergibt sich mit der Zusatzlagerstelle eine gleichmäßigere Verteilung der Lagerkräfte bei gleichzeitiger Reduzierung der Einzellagerkräfte.

Erfindungsgemäß wird somit erreicht, dass der Hilfsrahmen in seiner Grundstruktur unabhängig von der Komfortklasse des Antriebsaggregats verwendbar ist. Der Grundhilfsrahmen kann nach dem Baukastenprinzip entweder mit dem Adapterteil für Premiumfahrzeuge montiert werden. Alternativ kann der Grundhilfsrahmen auch ohne Adapterteil für ein Fahrzeug mit niedriger Komfortklasse verwendet werden.

Für den Fall, dass der Grundhilfsrahmen ohne Adapterteil verwendet wird, kann anstelle des Adapterteils ein Versteifungselement an den Grundhilfsrahmen montiert werden. Dabei ist es von Vorteil, wenn der Grundhilfsrahmen identische Befestigungskonsolen aufweist, an die wahlweise das Adapterteil oder alternativ das ein Versteifungselement anbindbar ist. Der Grundhilfsrahmen weist daher Befestigungskonsolen auf, die sowohl zur Befestigung des Adapterteils als auch des Versteifungselements nutzbar sind. Somit sind nach einer Individualisierung des Grundhilfsrahmens, d. h. nach der Montage des Adapterteils oder alternativ dazu des Versteifungselements, keine bzw. nur eine geringe Anzahl überflüssiger Befestigungskonsolen vorhanden. Vorteilig ist daher das Fahrzeug nicht mit dem Gewicht solcher überflüssiger Konsolen belastet.

Die oben genannten Befestigungskonsolen können als Lagerböcke außenseitig am Längsträger des Grundhilfsrahmens angesetzt sein. Alternativ können die Befestigungskonsolen auch in Form einer rohrförmigen Pfeife innerhalb der Hilfsrahmen-Längsträger eingeschweißt sein. Durch die Verwendung der vergleichsweise leichten rohrförmigen Pfeifen kann einerseits das Gewicht des Hilfsrahmens reduziert werden. Andererseits kann durch die integrale Ausbildung der Pfeifen innerhalb der Längsträger entsprechend Bauraum eingespart werden.

Bevorzugt kann das Adapterteil ein Zusatz-Querträger sein, der die jeweiligen Hilfsrahmen-Längsträger des Grundhilfsrahmens verbindet. Durch den ZusatzQuerträger ist einerseits die Zusatzlagerstelle stabil getragen und andererseits die Steifigkeit des Hilfsrahmens erhöht. So kann bei einem U-förmigen, offen gestalteten Grundhilfsrahmen mit dem Zusatz-Querträger ein geschlossener und damit stabiler Rahmen bereitgestellt werden.

Zur weiteren Steifigkeitserhöhung des Hilfsrahmens kann das Adapterteil bzw. der Zusatz-Querträger zusammen mit Versteifungsstreben eine eigenständige Versteifungs-Baugruppe bilden. Diese Versteifungs-Baugruppe kann - mit Ausnahme des integrierten Adapterteils - identisch mit dem, alternativ am Grundhilfsrahmen anbindbaren Versteifungselement sein. Somit ist gewährleistet, dass die Versteifungs-Baugruppe oder alternativ dazu das Versteifungselement die identischen Befestigungskonsolen am Grundhilfsrahmen nutzen können.

Vorteilhaft sind die Befestigungskonsolen so ausgebildet, dass sowohl die Versteifungs-Baugruppe als auch das Versteifungselement in Fahrzeughochachsenrichtung an der Bodenseite des Grundhilfsrahmens festgelegt werden können. Dadurch ist im Reparaturfall eine einfache Zugänglichkeit gewährleistet.

Für eine optimale Versteifung können die Versteifungsstreben fachwerkartig angeordnet sein. Bevorzugt ist es hierbei, wenn die Versteifungsstreben V-förmig nach Art eines Streben-Halbkreuzes an einem Mittelknotenteil des Zusatz-Querträgers zusammengeführt sind. Die Versteifungsstreben des Streben-Halbkreuzes können dabei identisch mit den entsprechenden Versteifungsstreben des Versteifungselementes sein.

Der Zusatz-Querträger kann an seinen beiden Seitenenden mit Seitenknotenteilen verstärkt werden. Mit den Seitenknotenteilen ist eine stabile Anbindung an die Hilfsrahmen-Längsträger gewährleistet. Jedes dieser Seitenknotenteile kann plattenförmig, etwa wie ein Trapez, verwindungssteif geformt sein. Jedes dieser Seitenknotenteile stellt im Crash-Fall einen Kraftflussknoten dar, über den Kräfte auf den Zusatz-Querträger geleitet werden. Um hier eine Verformung des Hilfsrahmens, insbesondere eine Parallelogrammverformung zu vermeiden, können die Seitenknotenteile des Zusatz-Querträgers in Fahrzeuglängsrichtung eine Mehrzahl voneinander beabstandeter Anbindungspunkte zur Anbindung an die Hilfsrahmen-Längsträger aufweisen.

Für eine stabile Halterung ist das zumindest eine Zusatzlager gemäß dem Patentanspruch 20 vorteilig in einem Montageabschnitt der Seitenknotenteile des Zusatz-Querträgers angeordnet sein.

Bei einem erfindungsgemäßen Verfahren zur Montage eines Antriebsaggregats auf einem Hilfsrahmen kann in einem ersten Montageschritt zunächst der vorbeschriebene Grundhilfsrahmen mit der zumindest einen hilfsrahmenseitigen Lagerstelle bereitgestellt werden. Dieser Grundhilfsrahmen ist unabhängig von der jeweiligen Komfortklasse des Fahrzeugs einsetzbar. Eine Individualisierung des Grundhilfsrahmens erfolgt anschließend in einem zweiten Montageschritt: So wird bei einer Verwendung des Grundhilfsrahmens in einem Premiumfahrzeug der Grundhilfsrahmen mit einem Adapterteil erweitert, das eine Zusatzlagerstelle bereitstellt.

Alternativ dazu wird bei Verwendung des Grundhilfsrahmens in einem Fahrzeug niedriger Komfortklasse das Adapterteil weggelassen und anstelle dessen kann beispielsweise ein übliches Versteifungselement an den Grundhilfsrahmen montiert werden.

Der erfindungsgemäße Hilfsrahmen ist sowohl im Bereich der Vorderachsen als auch Hinterachsen verwendbar. Ebenso kann der erfindungsgemäße Hilfsrahmen bei frontgetriebenen, heckgetriebenen und auch bei allradgetriebenen Fahrzeugen verwendet werden. Das Antriebsaggregat ist im Falle eines frontgetriebenen Kraftfahrzeugs die Brennkraftmaschine und das Geschwindigkeits-Wechselgetriebe etwa mit integriertem Vorderachsdifferenzial.

Die Versteifungs-Baugruppe und/oder das Strebenkreuz können aus Einzelstreben und Einzelknotenteilen zusammengesetzt und miteinander verschweißt werden. Anstelle dessen können die Versteifungs-Baugruppe und/oder das Strebenkreuz auch eine zweischalige Konstruktion sein, die eine im Tiefziehverfahren bearbeitete Blech-Oberschale und eine damit verschweißte Blech-Unterschale aufweist. In diesem Fall sind die Streben fertigungstechnisch einfach bereits materialeinheitlich und einstückig in der Oberschale oder der Unterschale vorgeformt.

Nachfolgend ist ein Ausführungsbeispiel der Erfindung anhand der beigefügten Figuren beschrieben.

Es zeigen:
- Fig. 1: grob schematisch in einer perspektivischen Ansicht von oben einen Hilfsrahmen;
- Fig. 2: in einer perspektivischen Ansicht von unten den Hilfsrahmen aus der Fig. 1;
- Fig.3: in einer Explosionsdarstellung einen Grundhilfsrahmen mit zugehörigem Adapterteil und einem Versteifungselement;
- Fig. 4: in einer vergrößerten Teilansicht einen Hilfsrahmen-Längsträger gemäß einer Abwandlung; und
- Fig. 5: in einer Teilschnittansicht den Hilfsrahmen-Längsträger aus der Fig. 4.

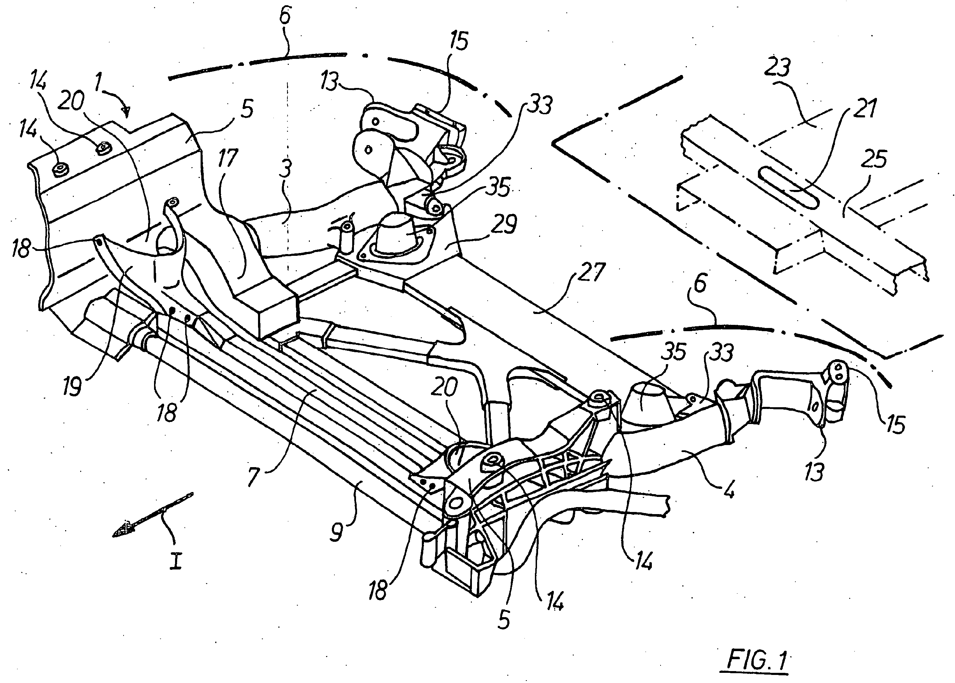

In der **Fig. 1** ist beispielhaft ein Hilfsrahmen 1 als Vorderachshilfsrahmen gezeigt. Der Hilfsrahmen 1 trägt ein nicht gezeigtes Antriebsaggregat, das eine Brennkraftmaschine mit zugeordnetem Geschwindigkeits-Wechselgetriebe aufweist. Der Hilfsrahmen 1 weist in der durch den Pfeil I gekennzeichneten Fahrtrichtung in Fahrzeuglängsrichtung gesehen zwei einander seitlich gegenüberliegende Hilfsrahmen-Längsträger 3, 4 auf. Diese sind jeweils frontseitig mit Knotenelementen 5 verbunden, die hier kastenförmige Gussknoten 5 sind. Diese Gussknoten 5 verbinden die beiden Hilfsrahmen-Längsträger 3, 4 mit einem Hilfsrahmen-Querträger 7. In der Fahrtrichtung I frontseitig vor dem Hilfsrahmen-Querträger 7 erstreckt sich parallel dazu ein Stabilisator 9.

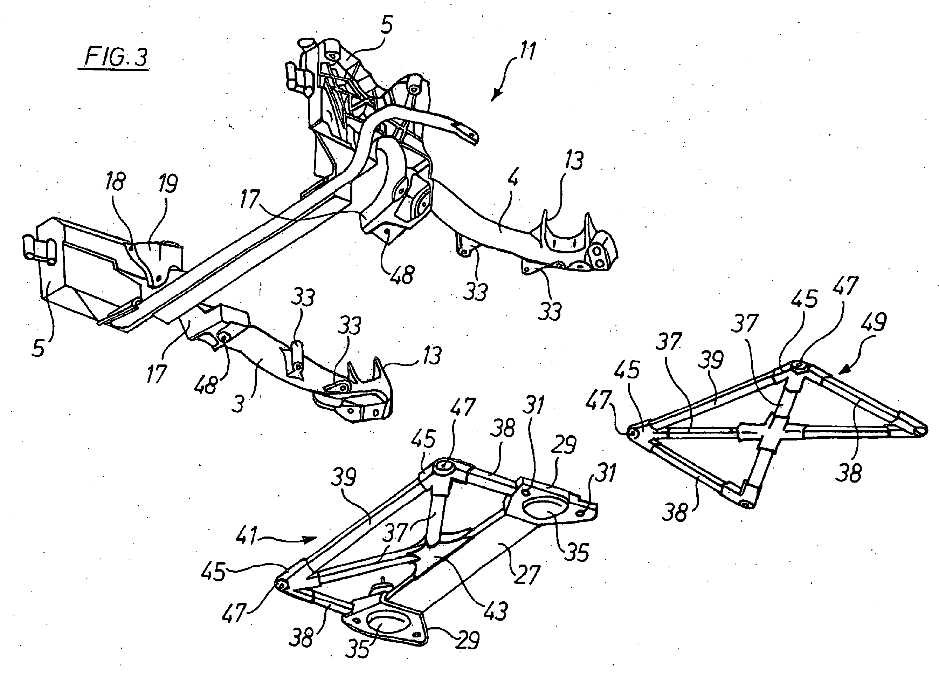

Die beiden Hilfsrahmen-Längsträger 3, 4 bilden zusammen mit dem Hilfsrahmen-Querträger 7 einen Grundhilfsrahmen 11, wie er in der Explosionsdarstellung der **Fig. 3** erkennbar ist. Demzufolge ist der Grundhilfsrahmen 11 ein U-förmiger, rückseitig offener Rahmen.

Wie aus der **Fig. 1** weiter hervorgeht, weist jeder der Hilfsrahmen-Längsträger 3, 4 jeweils hintere Lenkerkonsolen 13 auf, die unmittelbar neben hinteren Karosserieanbindungspunkten 15 ausgebildet sind. Entsprechende vordere Lenkerkonsolen 17 sind gemäß der **Fig. 1** jeweils in den Gussknoten 5 geformt.

Gemäß den Figuren sind an jedem der beiden Gussknoten 5 innenseitig jeweils eine halbschalenförmige Lagerkonsole 19 für ein nicht gezeigtes Antriebsaggregatslager vorgesehen. Die Lagerkonsolen 19 sind über punktförmig angedeutete Schraubverbindungen 18 mit den Gussknoten 5 verschraubt.

Der Hilfsrahmen 1 ist mit vorderen, gussknotenseitigen Anbindungspunkten 14 und mit den hinteren Karosserieanbindungspunkten 15 an die in der **Fig. 1** strichpunktiert angedeuteten Längsträger 6 einer Fahrzeugkarosserie befestigt.

Die beiden frontseitigen Lagerkonsolen 19 begrenzen jeweils als Lagerstelle einen Hohlraum 20, in dem ein nicht dargestelltes Lager einzusetzen ist. Die beiden frontseitigen Lagerstellen 20 stützen zusammen mit einer karosserieseitigen Lagerstelle 21 das Antriebsaggregat ab. Diese karosserieseitige Lagerstelle 21 ist gemäß der **Fig. 1** im Bereich eines angedeuteten Mittentunnels 23 auf einer Quertraverse 25 angeordnet. Auf der karosserieseitigen Lagerstelle 21 ist insbesondere das Getriebe des Antriebsaggregats abgestützt.

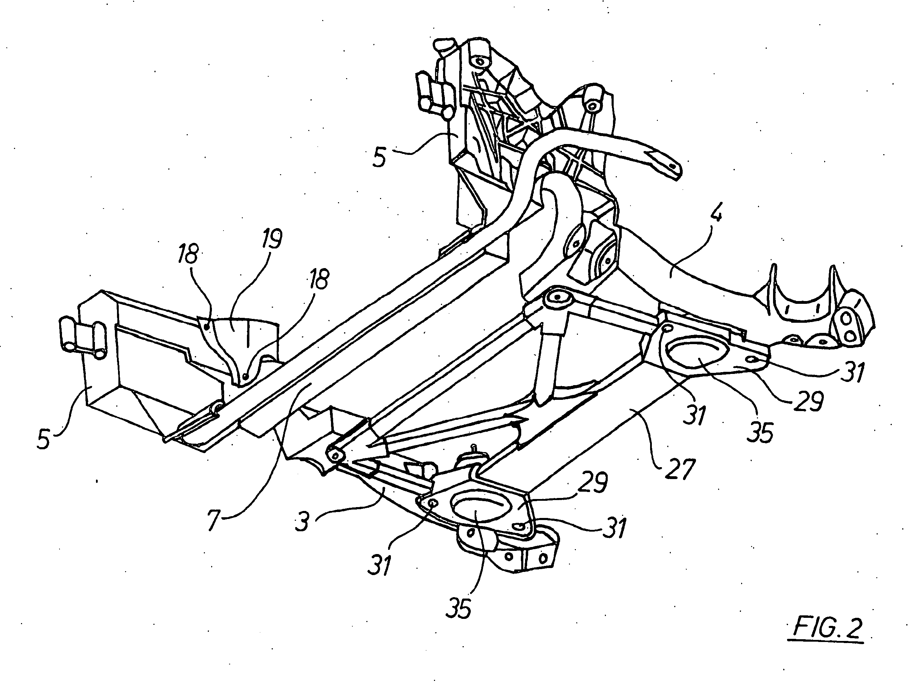

Wie aus der **Fig. 1** weiter hervorgeht, ist der Grundhilfsrahmen 11 durch ein als Zusatz-Querträger 27 gebildetes Adapterteil erweitert. Der Zusatz-Querträger 27 weist stirnseitig jeweils ein plattenförmiges Seitenknotenteil 29 aufweist. Das Seitenknotenteil 29 ist gemäß den **Fig. 2** und **3** grob trapezförmig gestaltet und weitet sich in Richtung der Hilfsrahmen-Längsträger 3, 4 aus. An seinem äußeren Rand weist jedes Seitenknotenteil 29 zwei in Fahrtrichtung I voneinander beabstandete, kreisförmig angedeutete Schraubpunkte 31 auf, über die der Zusatz-Querträger 27 an zwei Befestigungskonsolen 33 der Hilfsrahmen-Längsträger 3, 4 angebunden ist.

Jedes der Seitenknotenteile 29 des Zusatz-Querträgers 27 weist gemäß der **Fig. 2** kreisförmige Aufnahmeöffnungen auf, in die jeweils angedeutete Zusatzlager 35 eingesetzt sind, die entsprechende Zusatzlagerstellen zur Abstützung eines vorderen Bereiches des Getriebes des Antriebsaggregats darstellen. Auf diese Weise ist das Antriebsaggregat in einer Fünfpunktlagerung auf dem Hilfsrahmen 1 und auf der Karosserie abgestützt. Biegeschwingungen, die sich bei einer Dreipunktlagerung zwischen den vorderen beiden Lagerstellen 20 und der hinteren karosserieseitigen Lagerstelle 21 aufgrund einer Längenausdehnung des Antriebsaggregats ergeben, können somit durch die beiden Zusatzlager 35 aufgenommen werden. Außerdem ergibt sich durch die Fünfpunktlagerung eine gleichmäßigere Verteilung der Lagerkräfte bei gleichzeitiger Reduzierung der Einzellagerkräfte.

Der Zusatzquerträger 27 bildet zusammen mit fachwerkartig angeordneten Versteifungsstreben 37, 38 und 39 eine kompakte Versteifungs-Baugruppe 41. Diese Baugruppe 41 ist in der Explosionsdarstellung der **Fig. 3** in Alleinstellung gezeigt. Die Versteifungsstreben 37 sind demzufolge V-förmig nach Art eines Streben-Halbkreuzes an einem Mittelknotenteil 43 des Zusatz-Querträgers 27 zusammengeführt. Die Strebenenden der V-förmig angeordneten Versteifungsstreben 37 sind über Längsstreben 38 und über eine Querstrebe 39 miteinander verbunden. Insgesamt bilden die Streben 37, 38, 39 daher mit dem Zusatz-Querträger 27 eine verwindungssteife geschlossene rechteckförmige Rahmenstruktur.

Bei einem Zusammenschluss der oben erwähnten Versteifungs-Baugruppe 41 mit dem U-förmigen Grundhilfsrahmen 11 ergibt sich eine besonders steife Doppel-Rahmenkonstruktion. In dieser Doppel-Rahmenkonstruktion bildet die Versteifungs-Baugruppe 41 einen inneren geschlossenen Rahmen. Der Grundhilfsrahmen 11 bildet zusammen mit dem Zusatz-Querträger 27 einen äußeren geschlossenen Rahmen. Sowohl der innere Rahmen als auch der äußere Rahmen weisen mit dem Zusatz-Querträger 27 eine gemeinsame Rahmenseite auf. Demgegenüber weist die Versteifungs-Baugruppe 41 auf der gegenüberliegenden Seite jeweils Eckknotenteile 45 mit Anbindungspunkten 47 auf, um die Versteifungs-Baugruppe 41 mit dem äußeren Rahmen, d. h. mit korrespondierenden Anbindungspunkten 48 der Gussknoten 5 des Hilfsrahmens 1 zu verschrauben.

Anhand der Explosionsdarstellung der **Fig. 3** wird nachfolgend ein Verfahren zur Montage eines Antriebsaggregats auf dem Grundhilfsrahmen 11 beschrieben. Demzufolge wird zunächst in einem ersten Montageschritt der Grundhilfsrahmen 11 mit seinen beiden frontseitigen Lagerstellen 20 bereitgestellt.

Eine Individualisierung des Grundhilfsrahmens 11 erfolgt im zweiten Montageschritt mit der Entscheidung, ob die Versteifungs-Baugruppe 41 oder anstelle dessen das Versteifungselement 49 am Grundhilfsrahmen **11** montiert werden soll.

Für den Fall, dass der Grundhilfsrahmen 11 in einem Kraftfahrzeug einer hohen Komfortklasse verwendet wird, wird der Grundhilfsrahmen 11 mit der, das Adapterteil 27 tragenden Versteifungs-Baugruppe 41 erweitert. Damit werden die beiden Zusatzlagerstellen 35 bereitgestellt, die das Antriebsaggregat zusätzlich im Bereich seines Getriebes abstützen. Hierzu wird die Versteifungs-Baugruppe 41 bodenseitig in der Fahrzeughochachsenrichtung von unten mit dem Grundhilfsrahmen 11 verbunden. Dabei werden die Seitenknotenteile 29 des Zusatz-Querträgers 27 mit den entsprechenden Befestigungskonsolen 33 der Hilfsrahmen-Längsträger 3, 4 verschraubt. Gleichzeitig werden die frontseitigen Eckknotenteile 45 der Versteifungs-Baugruppe 41 mit den vorderen Befestigungskonsolen 17 verschraubt.

Für den Fall, dass der U-förmige Grundhilfsrahmen 11 in einem Kraftfahrzeug mit niedrigerer Komfortklasse verwendet wird, kann auf die Versteifungs-Baugruppe 41 verzichtet werden. Anstelle dessen kann dem Baukastenprinzip folgend ein Versteifungselement 49 verwendet werden. Das Versteifungselement 49 ist gemäß der **Fig. 3** ein vierarmiges Strebenkreuz mit fachwerkartig angeordneten Streben 37, 38, 39.

Mit Ausnahme des Zusatz-Querträgers 27 und des Mittenknotenteils 43 sind sowohl die Versteifungs-Baugruppe 41 als auch das Strebenkreuz 49 identisch aufgebaut. So sind die Kreuzarmenden des Strebenkreuzes 49 ebenfalls über die Eckknotenteile 45 mit den Längsstreben 38 und der Querstrebe 39 verbunden. Die Eckknotenteile 45 des Strebenkreuzes weisen - wie auch die Versteifungs-Baugruppe 41 - als Anbindungspunkte die Schraublöcher 47 auf, über die das Strebenkreuz 49 an die hintere Befestigungskonsolen 33 des Grundhilfsrahmens 11 und an die vorderen Befestigungskonsolen 17 montierbar ist. D. h., dass sowohl das Strebenkreuz 49 als auch die Versteifungs-Baugruppe 41 jeweils an identischen Befestigungskonsolen 17, 33 angebunden werden können.

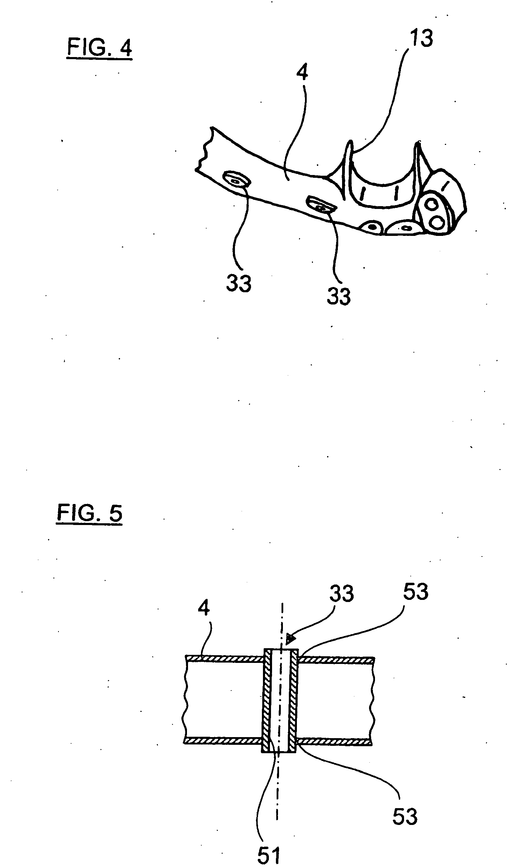

Wie aus den **Fig. 1** bis **3** hervorgeht, sind die Befestigungskonsolen 33 der Hilfsrahmen-Längsträger 3 und 4 als Lagerböcke außenumfangsseitig an die Hilfsrahmen-Längsträger 3, 4 geschweißt. Anstelle dieser Lagerböcke sind gemäß der in den **Fig. 4** und **5** gezeigten Abwandlung als Befestigungskonsolen rohrförmige Pfeifen 51 in Durchgangsöffnungen 53 der Längsträger 3, 4 eingesetzt sowie verschweißt. Dadurch ist eine unmittelbare und stabile Anbindung des Strebenkreuzes 49 oder der Versteifungs-Baugruppe 41 - ohne Zwischenschaltung eines radial vom Hilfsrahmen-Längsträger 3, 4 abstehenden Lagerbocks - an den Längsträgern 3, 4 ermöglicht. Bei der Montage des Strebenkreuzes 49 oder der Versteifungs-Baugruppe 41 werden Schrauben von unten durch die Schraubstellen 31, 47 des Strebenkreuzes 49 oder der Versteifungs-Baugruppe 41 geführt. Anschließend werden die Schrauben durch die rohrförmigen Pfeifen 51 geführt und mittels Befestigungsmuttern verschraubt.

## Patentansprüche

1. Hilfsrahmen für Kraftfahrzeuge, der zumindest eine Lagerstelle (20) aufweist, die zusammen mit zumindest einer weiteren hilfsrahmenseitigen und/oder karosserieseitigen Lagerstelle (21) ein Antriebsaggregat abstützt, wobei der Hilfsrahmen (1) einen Grundhilfsrahmen (11) aufweist, der die zumindest eine hilfsrahmenseitige Lagerstelle (20) vorsieht, und der mittels eines Adapterteils (27), das zumindest eine Zusatzlagerstelle (35) bereitstellt, erweitert wird, das Antriebsaggregat über zumindest einen karosserieseitigen Lagerstelle (21) abgestützt ist, **dadurch gekennzeichnet, dass** die vom Adapterteil (27) bereitgestellte Zusatzlagerstelle (35) zwischen der zumindest einen hilfsrahmenseitigen Lagerstelle (20) und der karosserieseitigen Lagerstelle (21) angeordnet ist.

2. Hilfsrahmen nach Anspruch 1, **dadurch gekennzeichnet, dass** der Grundhilfsrahmen (11) identische Befestigungskonsolen (17, 33) aufweist, an die wahlweise das Adapterteil (27) oder alternativ ein Versteifungselement (49) anbindbar ist.

3. Hilfsrahmen nach Anspruch 1 oder 2, **dadurch gekennzeichnet, dass** das Adapterteil (27) einen Zusatz-Querträger aufweist, der Hilfsrahmen-Längsträger (3, 4) des Grundhilfsrahmens (11) miteinander verbindet.

4. Hilfsrahmen nach einem der vorhergehenden Ansprüche, **dadurch gekennzeichnet, dass** das Adapterteil (27), vorzugsweise der Zusatz-Querträger, zusammen mit Versteifungsstreben (37, 38, 39) eine Versteifungs-Baugruppe (41) bildet.

5. Hilfsrahmen nach Anspruch 4, **dadurch gekennzeichnet, dass** die Versteifungs-Baugruppe (41) mit Ausnahme des integrierten Adapterteils (27) identisch mit dem alternativ am Grundhilfsrahmen (11) anbindbaren Versteifungselement (49) ist.

6. Hilfsrahmen nach Anspruch 4 oder Anspruch 5, **dadurch gekennzeichnet, dass** die Versteifungsstreben (37) V-förmig nach Art eines Streben-Halbkreuzes an einem Mittelknotenteil (43) des Zusatz-Querträgers (27) zusammengeführt sind.

7. Hilfsrahmen nach einem der Ansprüche 4 bis 6, **dadurch gekennzeichnet, dass** die Versteifungsstreben (37, 38, 39) der Versteifungs-Baugruppe (41) identisch mit den entsprechenden Versteifungsstreben des Versteifungselements (49) sind.

8. Hilfsrahmen nach einem der Ansprüche 3 bis 7, **dadurch gekennzeichnet, dass** der Zusatz-Querträger (27) stirnseitig jeweils ein Seitenknotenteil (29) zur Anbindung an den Hilfsrahmen (11) aufweist.

9. Hilfsrahmen nach Anspruch 8, **dadurch gekennzeichnet, dass** die Seitenknotenteile (29) des Zusatz-Querträgers (27) über Längsstreben (38) mit freien Strebenenden der Versteifungsstreben (37) verbunden sind.

10. Hilfsrahmen nach einem der vorhergehenden Ansprüche, **dadurch gekennzeichnet, dass** der Grundhilfsrahmen (11) mit seitlichen Hilfsrahmen-Längsträgern (3, 4) versehen ist, die über einen Hilfsrahmen-Querträger (7) verbunden sind.

11. Hilfsrahmen nach einem der vorhergehenden Ansprüche, **dadurch gekennzeichnet, dass** der Grundhilfsrahmen (11) ein U-förmiger, offener Rahmen ist.

12. Hilfsrahmen nach einem der Ansprüche 3 bis 12, **dadurch gekennzeichnet, dass** der Grundhilfsrahmen (11) zusammen mit dem montierten Zusatz-Querträger (27) ein geschlossener Rahmen ist.

13. Hilfsrahmen nach einem der Ansprüche 8 bis 12, **dadurch gekennzeichnet, dass** jedes der Seitenknotenteile (29) des Zusatz-Querträgers (27) einen Montageabschnitt für ein Zusatzlager (35) aufweist.

14. Hilfsrahmen nach einem der Ansprüche 8 bis 13, **dadurch gekennzeichnet, dass** jedes der Seitenknotenteile (29) des Zusatz-Querträgers (27) in Fahrzeuglängsrichtung (1) voneinander beabstandeten Anbindungspunkte (31) zur Anbindung an den Grundhilfsrahmen (11) aufweisen.

15. Hilfsrahmen nach einem der vorhergehenden Ansprüche, **dadurch gekennzeichnet, dass** die vom Adapterteil (27) bereitgestellte Zusatzlagerstelle (35) das Getriebe des Antriebsaggregats abstützt.

16. Hilfsrahmen nach einem der Ansprüche 4 bis 15, **dadurch gekennzeichnet, dass** der Grundhilfsrahmen (11) zusammen mit der die Versteifungs-Baugruppe (41) eine Doppelrahmen-Struktur ist, bei der die Versteifungs-Baugruppe (41) einen inneren Rahmen bildet.

17. Hilfsrahmen nach Anspruch 16, **dadurch gekennzeichnet, dass** der Grundhilfsrahmen (11) zusammen mit dem Zusatz-Querträger (27) der Versteifungs-Baugruppe 41 einen äußeren Rahmen der Doppelrahmen-Struktur bildet.

18. Hilfsrahmen nach Anspruch 17, **dadurch gekennzeichnet, dass** der Zusatz-Querträger (27) eine gemeinsame Rahmenseite des inneren Rahmens und des äußeren Rahmens der Doppelrahmen-Struktur bildet.

19. Hilfsrahmen nach Anspruch 17 oder 18, **dadurch gekennzeichnet, dass** der innere Rahmen an seinen, dem Zusatz-Querträger (27) gegenüberliegenden Eckbereichen (45) über Anbindungspunkte (47) mit dem Grundhilfsrahmen (11) verbunden ist.

20. Hilfsrahmen für Kraftfahrzeuge, der zumindest eine Lagerstelle (20) aufweist, die zusammen mit zumindest einer weiteren hilfsrahmenseitigen und/oder karosserieseitigen Lagerstelle (21) ein Antriebsaggregat abstützt, wobei der Hilfsrahmen (1) einen Grundhilfsrahmen (11) aufweist, der die zumindest eine hilfsrahmenseitige Lagerstelle (20) vorsieht, und der mittels eines Adapterteil (27), das zumindest eine Zusatzlagerstelle (35) bereitstellt, erweitert wind , wobei das Adapterteil (27) einen Zusatz-Querträger aufweist, der Hilfsrahmen-Längsträger (3, 4) des Grundhilfsrahmens (11) miteinander verbindet, und der Zusatz-Querträger (27) stirnseitig jeweils ein Seitenknotenteil (29) zur Anbindung an den Grundhilfsrahmen (11) aufweist, **dadurch gekennzeichnet, dass** jedes der Seitenknotenteile (29) des Zusatz-Querträgers (27) einen Montageabschnitt für ein Zusatzlager (35) aufweist.

21. Fahrzeugkarosserie mit einem daran montierten Hilfsrahmen nach einem der vorhergehenden Ansprüche.

22. Adapterteil für einen Hilfsrahmen nach einem der Ansprüche 1 bis 20.

23. Verfahren zur Montage von Antriebsaggregaten auf Hilfsrahmen für Kraftfahrzeuge, in welchem in einem ersten Montageschritt ein Grundhilfsrahmen (11) mit zumindest einer hilfsrahmenseitigen Lagerstelle (20) bereitgestellt wird, die zusammen mit zumindest einer weiteren hilfsrahmenseitigen und/oder karosserieseitigen Lagerstelle (20, 21) eine erste Abstützbasis für das Antriebsaggregat für Fahrzeuge niedriger Komfortklassen vorsieht, und für eine Erhöhung der Anzahl von Lagerstellen in einem zweiten Montageschritt der Grundhilfsrahmen (11) mit einem Adapterteil (27) mit zumindest einer Zusatzlagerstelle (35) erweitert wird, die zusammen mit den Lagerstellen (20, 21) eine erweiterte zweite Abstützbasis für Fahrzeuge höherer Komfortklassen vorsieht.

## Claims

1. Subframe for motor vehicles which has at least one mount point (20) which, together with at least one further mount point (21) on the subframe and/or on a body, supports a drive unit, wherein the subframe (1) has a basic subframe (11) which provides the at least one mount point (20) on the subframe and which is expanded by means of an adapter part (27) which provides at least one additional mount point (35), the drive unit is supported by means of at least one mount point (21) on the body, **characterized in that** the additional mount point (35) provided by the adapter part (27) is arranged between the at least one mount point (20) on the subframe and the mount point (21) on the body.

2. Subframe according to Claim 1, **characterized in that** the basic subframe (11) has identical fastening brackets (17, 33) to which the adapter part (27) or alternatively a stiffening element (49) can be selectively connected.

3. Subframe according to Claim 1 or 2, **characterized in that** the adapter part (27) has an additional cross member which connects the subframe longitudinal members (3, 4) of the basic subframe (11) to one another.

4. Subframe according to one of the preceding claims, **characterized in that** the adapter part (27), preferably the additional cross member, forms a stiffening assembly (41) together with stiffening struts (37, 38, 39).

5. Subframe according to Claim 4, **characterized in that** the stiffening assembly (41) is identical, with the exception of the integrated adapter part (27), to the stiffening element (49) that can alternatively be connected to the basic subframe (11).

6. Subframe according to Claim 4 or 5, **characterized in that** the stiffening struts (37) converge in a V-shape, in the manner of a half-cross strut configuration, at a central joint part (43) of the additional cross member (27).

7. Subframe according to one of Claims 4 to 6, **characterized in that** the stiffening struts (37, 38, 39) of the stiffening assembly (41) are identical to the corresponding stiffening struts of the stiffening element (49).

8. Subframe according to one of Claims 3 to 7, **characterized in that** the additional cross member (27) has, on the ends, in each case one side joint part (29) for connecting to the subframe (11).

9. Subframe according to Claim 8, **characterized in that** the side joint parts (29) of the additional cross member (27) are connected via longitudinal struts (38) to free strut ends of the stiffening struts (37).

10. Subframe according to one of the preceding claims, **characterized in that** the basic subframe (11) is provided with lateral subframe longitudinal members (3, 4) which are connected via a subframe cross member (7).

11. Subframe according to one of the preceding claims, **characterized in that** the basic subframe (11) is a U-shaped, open frame.

12. Subframe according to one of Claims 3 to 12, **characterized in that** the basic subframe (11) together with the additional cross member (27) mounted thereon is a closed frame.

13. Subframe according to one of Claims 8 to 12, **characterized in that** each of the side joint parts (29) of the additional cross member (27) has an installation portion for an additional mount (35).

14. Subframe according to one of Claims 8 to 13, **characterized in that** each of the side joint parts (29) of the additional cross member (27) have connecting points (31), which are spaced apart from one another in the vehicle longitudinal direction (I), for connecting to the basic subframe (11).

15. Subframe according to one of the preceding claims, **characterized in that** the additional mount point (35) provided by the adapter part (27) supports the gearbox of the drive unit.

16. Subframe according to one of Claims 4 to 15, **characterized in that** the basic subframe (11) together with the stiffening assembly (41) is a double-frame structure in which the stiffening assembly (41) forms an inner frame.

17. Subframe according to Claim 16, **characterized in that** the basic subframe (11) together with the additional cross member (27) of the stiffening assembly (41) forms an outer frame of the double-frame structure.

18. Subframe according to Claim 17, **characterized in that** the additional cross member (27) forms a common frame side of the inner frame and of the outer frame of the double frame structure.

19. Subframe according to Claim 17 or 18, **characterized in that** the inner frame, at its corner regions (45) situated opposite the additional cross member (27), is connected by means of connecting points (47) to the basic subframe (11).

20. Subframe for motor vehicles which has at least one mount point (20) which, together with at least one further mount point (21) on the subframe and/or on a body, supports a drive unit, wherein the subframe (1) has a basic subframe (11) which provides the at least one mount point (20) on the subframe and which is expanded by means of an adapter part (27) which provides at least one additional mount point (35), wherein the adapter part (27) has an additional cross member which connects subframe longitudinal members (3, 4) of the basic subframe (11) to one another, and the additional cross member (27) has, on the ends, in each case one side joint part (29) for connecting to the basic subframe (11), **characterized in that** each of the side joint parts (29) of the additional cross member (27) has an installation portion for an additional mount (35).

21. Vehicle body having mounted thereon a subframe according to one of the preceding claims.

22. Adapter part for a subframe according to one of Claims 1 to 20.

23. Method for mounting drive assemblies on subframes for motor vehicles, in which method, in a first mounting step, a basic subframe (11) having at least one mount point (20) on the subframe is provided, which mount point together with at least one further mount point (20, 21) on the subframe and/or on a body provides a first support basis for the drive unit for vehicles of low comfort classes, and for an increase in the number of mount points, in a second mounting step, the basic subframe (11) is expanded by an adapter part (27) having at least one additional mount point (35) which, together with the mount points (20, 21), provides an expanded second support basis for vehicles of higher comfort classes.

## Revendications

1. Châssis auxiliaire pour véhicules automobiles, qui présente au moins un point d'appui (20) qui, conjointement avec au moins un autre point d'appui (21) du côté du châssis auxiliaire et/ou du côté de la carrosserie, supporte un groupe motopropulseur, le châssis auxiliaire (1) présentant un châssis auxiliaire de base (11) qui constitue l'au moins un point d'appui (20) du côté du châssis auxiliaire, et qui peut être élargi au moyen d'une pièce d'adaptateur (27), qui fournit l'au moins un point d'appui supplémentaire (35), le groupe motopropulseur étant supporté par le biais d'au moins un point d'appui (21) du côté de la carrosserie, **caractérisé en ce que** le point d'appui supplémentaire (35) fourni par la pièce d'adaptateur (27) est disposé entre l'au moins un point d'appui (20) du côté du châssis auxiliaire et le point d'appui (21) du côté de la carrosserie.

2. Châssis auxiliaire selon la revendication 1, **caractérisé en ce que** le châssis auxiliaire de base (11) présente des consoles de fixation identiques (17, 33) sur lesquelles la pièce d'adaptateur (27), ou en variante un élément de renfort (49), peuvent être raccordés de manière sélective.

3. Châssis auxiliaire selon la revendication 1 ou 2, **caractérisé en ce que** la pièce d'adaptateur (27) présente une traverse supplémentaire qui relie l'un à l'autre les supports longitudinaux de châssis auxiliaire (3, 4) du châssis auxiliaire de base (11).

4. Châssis auxiliaire selon l'une quelconque des revendications précédentes, **caractérisé en ce que** la pièce d'adaptateur (27), de préférence la traverse supplémentaire, forme conjointement avec des entretoises de renfort (37, 38, 39) un module de renfort (41).

5. Châssis auxiliaire selon la revendication 4, **caractérisé en ce que** le module de renfort (41), à l'exception de la pièce d'adaptateur intégrée (27), est identique à l'élément de renfort (49) pouvant en variante être raccordé au châssis auxiliaire de base (11).

6. Châssis auxiliaire selon la revendication 4 ou selon la revendication 5, **caractérisé en ce que** les entretoises de renfort (37) sont assemblées en forme de V à la manière d'une demi-croix d'entretoisement sur une pièce nodale centrale (43) de la traverse supplémentaire (27).

7. Châssis auxiliaire selon l'une quelconque des revendications 4 à 6, **caractérisé en ce que** les entretoises de renfort (37, 38, 39) du module de renfort (41) sont identiques aux entretoises de renfort correspondantes de l'élément de renfort (49).

8. Châssis auxiliaire selon l'une quelconque des revendications 3 à 7, **caractérisé en ce que** la traverse supplémentaire (27) présente du côté frontal à chaque fois une pièce nodale latérale (29) pour le raccordement au châssis auxiliaire (11).

9. Châssis auxiliaire selon la revendication 8, **caractérisé en ce que** les pièces nodales latérales (29) de la traverse supplémentaire (27) sont connectées par le biais d'entretoises longitudinales (38) aux extrémités d'entretoise libres des entretoises de renfort (37).

10. Châssis auxiliaire selon l'une quelconque des revendications précédentes, **caractérisé en ce que** le châssis auxiliaire de base (11) est pourvu de supports longitudinaux de châssis auxiliaire latéraux (3, 4) qui sont connectés par le biais d'une traverse de châssis auxiliaire (7).

11. Châssis auxiliaire selon l'une quelconque des revendications précédentes, **caractérisé en ce que** le châssis auxiliaire de base (11) est un châssis ouvert en forme de U.

12. Châssis auxiliaire selon l'une quelconque des revendications 3 à 12, **caractérisé en ce que** le châssis auxiliaire de base (11), conjointement avec la traverse supplémentaire (27) montée, forme un châssis fermé.

13. Châssis auxiliaire selon l'une quelconque des revendications 8 à 12, **caractérisé en ce que** chacune des parties nodales latérales (29) de la traverse supplémentaire (27) présente une portion de montage pour un appui supplémentaire (35).

14. Châssis auxiliaire selon l'une quelconque des revendications 8 à 13, **caractérisé en ce que** chacune des parties nodales latérales (29) de la traverse supplémentaire (27) présente dans la direction longitudinale du véhicule (1) des points de liaison espacés les uns des autres (31) pour la liaison au châssis auxiliaire de base (11).

15. Châssis auxiliaire selon l'une quelconque des revendications précédentes, **caractérisé en ce que** le point d'appui supplémentaire (35) fourni par la pièce d'adaptateur (27) supporte la transmission du groupe motopropulseur.

16. Châssis auxiliaire selon l'une quelconque des revendications 4 à 15, **caractérisé en ce que** le châssis auxiliaire de base (11), conjointement avec le module de renfort (41), est une structure à double châssis dans laquelle le module de renfort (41) forme un châssis intérieur.

17. Châssis auxiliaire selon la revendication 16, **caractérisé en ce que** le châssis auxiliaire de base (11), conjointement avec la traverse supplémentaire (27) du module de renfort (41), forme un châssis extérieur de la structure à double châssis.

18. Châssis auxiliaire selon la revendication 17, **caractérisé en ce que** la traverse supplémentaire (27) forme un côté de châssis commun du châssis intérieur et du châssis extérieur de la structure de double châssis.

19. Châssis auxiliaire selon la revendication 17 ou 18, **caractérisé en ce que** le châssis intérieur est connecté au niveau de ses régions de coin (45) opposées à la traverse supplémentaire (27) par le biais de points de liaison (47) au châssis auxiliaire de base (11).

20. Châssis auxiliaire pour véhicules automobiles, qui présente au moins un point d'appui (20) qui, conjointement avec au moins un autre point d'appui (21) du côté du châssis auxiliaire et/ou du côté de la carrosserie, supporte un groupe motopropulseur, le châssis auxiliaire (1) présentant un châssis auxiliaire de base (11) qui constitue l'au moins un point d'appui (20) du côté du châssis auxiliaire, et qui peut être élargi au moyen d'une pièce d'adaptateur (27), qui fournit l'au moins un point d'appui supplémentaire (35), la pièce d'adaptateur (27) présentant une traverse supplémentaire qui relie l'un à l'autre les supports longitudinaux de châssis auxiliaire (3, 4) du châssis auxiliaire de base (11), et la traverse supplémentaire (27) présentant du côté frontal à chaque fois une pièce nodale latérale (29) pour la liaison au châssis auxiliaire de base (11), **caractérisé en ce que** chacune des pièces nodales latérales (29) de la traverse supplémentaire (27) présente une portion de montage pour un appui supplémentaire (35).

21. Carrosserie de véhicule comprenant un châssis auxiliaire monté sur celle-ci selon l'une quelconque des revendications précédentes.

22. Pièce d'adaptateur pour un châssis auxiliaire selon l'une quelconque des revendications 1 à 20.

23. Procédé de montage de groupes motopropulseurs sur des châssis auxiliaires pour véhicules automobiles, dans lequel, dans une première étape de montage, un châssis auxiliaire de base (11) est fourni avec au moins un point d'appui (20) du côté du châssis auxiliaire, lequel, conjointement avec au moins un autre point d'appui (20, 21) du côté du châssis auxiliaire et/ou du côté de la carrosserie, fournit une première base de support pour le groupe motopropulseur pour véhicules de plus basses classes de confort, et est élargi pour augmenter le nombre de points d'appui dans une deuxième étape de montage du châssis auxiliaire de base (11) avec une pièce d'adaptateur (27) avec au moins un point d'appui supplémentaire (35), qui, conjointement avec les points d'appui (20, 21), fournit une deuxième base de support élargie pour des véhicules de plus hautes classes de confort.
